# EUROPÄISCHE PATENTANMELDUNG

(11) **EP 2 060 935 A1**
(43) Veröffentlichungstag der Anmeldung: **20.05.2009**
(21) Anmeldenummer: 08019819.5
(22) Anmeldetag: 13.11.2008
(51) Int. Cl.: G02B 5/28, F21S 8/00, F21S 10/00, F21S 10/02, F21V 9/10

(54) **Farbfilter und Verfahren zu dessen Herstellung**

(30) Priorität: 14.11.2007 DE 102007054701
(71) Anmelder: Schott AG, 55122 Mainz (DE)
(72) Erfinder: Mehrtens, Andree, Dr., 31073 Grünenplan (DE); Zogg, Lutz, 37581 Bad Gandersheim (DE)
(74) Vertreter: Herden, Andreas F.

(57) **Zusammenfassung**

Es wird ein Farbfilter (1) für Beleuchtungszwecke, wie etwa für die Bühnenbeleuchtung vorgeschlagen, welcher eine vollflächige Entspiegelungsschicht (3) und eine darauf angeordnete strukturierte weitere, mehrlagige Interferenz-Filterschicht (4) umfasst.

## Beschreibung

Die Erfindung betrifft allgemein Farbfilter mit Interferenz-Schichtsystemen, insbesondere Farbfilter, welche beispielsweise in Beleuchtungssystemen für Bühnen eingesetzt werden.

Die EP 0 621 495 A beschreibt ein Farbenüberblendungssystem für eine Leuchte, welches einen kontinuierlich durch Drehung einstellbaren Filter umfasst. Dieser Filter weist ein als Kantenfilter ausgebildetes Schichtsystem auf, welches derart hergestellt ist, daß die spektrale Abschneidekante entlang der Umfangsrichtung variiert.

Auch die WO 99 13267 A und die EP 0 583 048 A beschreiben ein derartiges Prinzip eines durch Drehung einstellbaren Filters. Die Schichtdicken der Lagen der dichroitischen Filterbeschichtung werden entlang der Oberfläche kontinuierlich variiert.

Nachteilig ist hier zwar, daß die Farbtöne zwar beliebig gewählt werden können, allerdings eine Einstellung der Farbsättigung nicht möglich ist.

Die US 4,914,556 A beschreibt einen Scheinwerfer mit mehreren hintereinandergeschalteten rotierenden dichroitischen Farbfiltern, wobei das Filtermaterial als Muster mit variabler Dichte aufgebracht ist. Je nach Dichte der im Strahlengang befindlichen Bereiche des Filters kann dann die Farbsättigung der mit dem jeweiligen Filter gefilterten Farbe eingestellt werden.

Ein ähnliches optisches System zum Erzeugen von farbigen Lichtfeldern für die Bühnenbeleuchtung ist auch aus der WO 01/037032 A2 bekannt. Das optische System basiert auf einer substraktiven Farbmischung. Das Prinzip dieses Systems basiert auf einem Satz dichroitischer Filter, die bestimmte Spektralanteile reflektieren und andere Spektralanteile transmittieren. Die Hintereinanterschaltung der Filter ergibt den gewünschten Farbton. Um eine stufenlose Regelung des Farbtons und der Farbsättigung zu erreichen, sind die Filter derart strukturiert, daß sie sowohl filternde, als auch nicht filternde Bereiche aufweisen. Durch die nicht filternden Bereiche tritt weisses Licht hindurch, welches dann entweder die Farbsättigung als austretender Weissanteil beeinflußt und/oder durch einen nachfolgenden Filter zur Veränderung des Farbtons gefiltert werden kann.

Nachteilig bei den Systemen, wie sie aus der WO 01/037032 A2 und der US 4,914,556 A bekannt sind, ist jedoch, daß an den Bereiche des Filters, die weisses Licht transmittieren, Reflexionen auftreten können, welche die Helligkeit des Scheinwerfers reduzieren. Zudem können Mehrfachreflexionen innerhalb der hintereinander angeordneten einzelnen Filter auftreten, die zu Farbverfälschungen führen.

Will man das Substrat des Filters dazu entspiegeln, ergibt sich zusätzlich das Problem, daß sich die Entspiegelungsschicht und die Farbfilterschicht als Interferenzschichtsysteme gegenseitig beeinflussen. Dies kann zur Verschiebung des Farbortes eines kombinierten Entspiegelungs- und Farbschichtsystems gegenüber den berechneten Eigenschaften des Farbschichtsystems führen.

Um dies zu vermeiden, wird dazu bisher sowohl das Farbschichtsystem, als auch die Entspiegelungsschicht strukturiert, so daß die beiden Schichtsysteme ausschließlich nebeneinander auf komplementären Bereichen der Substratoberfläche angeordnet sind.

Diese Herstellungsweise erfordert allerdings mehrfache Maskierung und ist daher entsprechend aufwendig.

Der Erfindung liegt daher die Aufgabe zugrunde, die Herstellung von strukturierten Farbfiltern für Beleuchtungszwecke zu vereinfachen. Diese Aufgabe wird gelöst durch den Gegenstand der unabhängigen Ansprüche. Vorteilhafte Ausgestaltungen und Weiterbildungen der Erfindung sind in den jeweiligen abhängigen Ansprüchen angegeben.

Demgemäß sieht die Erfindung ein Verfahren zur Herstellung eines Farbfilters zur Erzeugung farbiger Lichtfelder für Beleuchtungszwecke, bei welchem
- auf einem flächigen transparenten Substrat vollflächig eine Interferenz-Entspiegelungsschicht, die nachfolgend auch als Antireflex-Schichtsystem, beziehungsweise AR-Schichtsystem bezeichnet wird, zumindest auf einer Seite, besonders bevorzugt beidseitig hergestellt wird,
- das Substrat dann auf der mit der Interferenz-Entspiegelungsschicht beschichteten Seite mit einer Maskierung versehen wird, welche Bereiche der Seite abdeckt, und dann
- eine weitere, mehrlagige Interferenz-Filterschicht auf der maskierten Seite abgeschieden wird, welche abwechselnde erste und zweite Lagen umfasst, wobei die ersten Lagen einem ersten Brechungsindex und die zweiten Lagen einen zweiten Brechungsindex aufweisen, der sich vom ersten Brechungsindex der ersten Lagen unterscheidet, wobei
- die Schichtdicken der Lagen der weiteren, mehrlagigen Interferenz-Filterschicht unter Einbeziehung der darunterliegenden Interferenz-Entspiegelungsschicht so ausgelegt werden, daß die weitere, mehrlagige Interferenz-Filterschicht zusammen mit der Interferenz-Entspiegelungsschicht ein Farbfilterschichtsystem ergeben, welches zumindest eine Kante im Transmissionsspektrum im sichtbaren Spektralbereich aufweist, welche einen reflektierenden Wellenlängenbereich von einem Wellenlängenbereich trennt, innerhalb welchem Licht durch das Farbfilterschichtsystem transmittiert wird, und wobei
- die Maskierung nach der Abscheidung der weiteren, mehrlagigen Interferenz-Filterschicht entfernt wird, so daß die weitere, mehrlagige Interferenz-Filterschicht zumindest einen ersten Bereich des Substrats bedeckt und zumindest einen zweiten Bereich freilässt und der zweite Bereich aufgrund der Interferenz-Entspiegelungsschicht entspiegelt ist. Als sichtbarer Spektralbereich kann dabei allgemein der Bereich von 400 bis 800 Nanometern Wellenlänge angesetzt werden.
   Erfindungsgemäß ist also ein Farbfilterschichtsystem vorgesehen, bei dem unter dem eigentlichen Farbfilterstack ein AR-Schichtsystem liegt, bei welchem der auf diesen AR-Stack aufgebrachte Farbfilterstack in seiner Schichtabfolge so berechnet worden ist, dass dieser zusammen mit den unterliegenden Schichten des AR-Stacks gerade die gewünschte Farbwirkung erzielt, d.h. die gewünschten (x/y)-oder (u'/v')-Farbkoordinaten erreicht werden. Bei Farbfiltern geschieht dies üblicherweise in Transmission. Denkbar wäre allerdings auch, einen Filter für Reflexion auszulegen.
   Ein solcher Farbfilter wird dabei vorzugsweise zur Filterung nur einer bestimmten Farbe, beziehungsweise zur Erzeugung eines bestimmten Farbtons, jedoch mit entlang der Substratoberfläche bereichsweise variierender Farbsätigung ausgebildet. Der Filter kann insbesondere so ausgebildet sein, daß sich die Farbsättigung durch Drehung des Filters einstellen lässt.
   Das AR-Schichtsystem liegt dabei unter dem Farbfilterstack, d.h. die AR-Schichten werden zuerst aufgebracht und erst danach die Schichtabfolge des Farbfilterstacks.
   Es ist für diese Erfindung wesentlich, dass nicht auf alle Teile des Substrates nachträglich der Farbfilterstack aufgebracht wird, sondern dass Teile des Substrates mit der reinen Entspiegelungsschicht versehen übrig bleiben. Hierzu findet nach dem Aufbringen der AR-Beschichtung ein Maskierungsprozess statt, der Teile der bereits aufgebrachten AR-Beschichtung abdeckt. Nach dem nachträglichen Aufbringen des Farbfilterstacks und dem Ablösen der Maskierung bleiben somit Teilbereiche auf dem Substrat übrig, die mit dem Farbfilterstack versehen sind, während andere Bereiche des Substrates entspiegelt sind.
   Der hierbei aufgebrachte Farbfilterstack kann für sich alleine im allgemeinen nicht die gewünschten Farbkoordinaten erzielen, sondern erreicht diese in exakter Weise erst zusammen mit dem unterliegenden AR-Schichtsystem.
   Durch die erfindungsgemäße Abfolge hat man völlige Freiheit bei der Wahl der untenliegenden AR-Beschichtung. So ist es möglich, Substrate mit einer Beschichtungsanlage zu entspiegeln und sie anschließend nach dem Maskierungsprozess in einer anderen Beschichtungsanlage mit dem Farbfilterstack zu versehen. Ein großer Vorteil ist hierbei, wenn die AR-Beschichtung in einer großen Anlage preisgünstig (zumindest einseitig, aber vorteilhafterweise insbesondere beidseitig) aufgebracht wird.
   So ist es möglich, preiswert entspiegelte Substrate einzusetzen, die großtechnisch in Durchlaufanlagen z.B. für Vitrinenentspiegelungen oder Schaufensterentspiegelungen hergestellt werden. Aus diesen auf größeren Flächen hergestellten entspiegelten Gläsern (typischerweise von 1 m x 2 m bis zu 3 x 6 m) können anschließend eine Vielzahl von Substraten der benötigten Größe und Form zurechtgeschnitten und die vereinzelten (beidseitig) entspiegelten Substrate werden nach dem nachfolgenden Maskierungsschritt anschließend in der anderen Beschichtungsanlage mit dem Farbfilterstack versehen. Es ist daher auch günstig, verschiedene Abscheideanlagen für die Interferenz-Entspiegelungsschicht und die weitere, mehrlagige Interferenz-Filterschicht einzusetzen. Weiterhin wird bei dieser Ausführungsform der Erfindung die Interferenz-Entspiegelungsschicht also auf einem Vorsubstrat aufgebracht, aus welchem dann das Substrat herausgetrennt wird, wobei die weitere, mehrlagige Interferenz-Filterschicht erst auf dem herausgetrennten Substrat aufgebracht wird.
   Alternativ ist es möglich, auch die Beschichtung mit dem Farbfilterstack bereits auf dem Vorsubstrat vorzunehmen. Bei dieser Variante der Erfindung wird daher sowohl die Interferenz-Entspiegelungsschicht, als auch die weitere, mehrlagige Interferenz-Filterschicht auf einem Vorsubstrat aufgebracht und dann das Substrat herausgetrennt.
   Großflächige Substrate werden oftmals durch Flüssigbeschichtung, beispielsweise in den oben genannten Durchlaufanlagen entspiegelt. Es ist daher weiterhin günstig, wenn die Interferenz-Entspiegelungsschicht durch Tauchbeschichtung, beziehungsweise Tauchziehen und/oder im Sol-Gel-Verfahren hergestellt wird. Sol-Gel-Abscheidung mit Tauchbeschichtung ermöglicht eine gute Kontrolle der Schichtdicke, auch andere Flüssigbeschichtungsverfahren, wie beispielsweise Sprühbeschichtung sind aber denkbar, sofern die Schichtdicke hinreichend genau eingestellt werden kann.
   Besonders vorteilhaft, insbesondere bei den vorstehend beschriebenen Ausführungsformen, bei welchen ein Vorsubstrat verwendet wird, ist es weiterhin, die Interferenz-Entspiegelungsschicht und die weitere, mehrlagige Interferenz-Filterschicht mit unterschiedlichen Abscheideverfahren aufzubringen. Dies bietet sich an, weil die Entspiegelungsschicht vollflächig und unstrukturiert aufgebracht wird.
   Für die Beschichtung mit der weiteren, mehrlagigen Interferenz-Filterschicht wird weiterhin Vakuumabscheidung bevorzugt. Dies ist deshalb günstig, weil diese Filterschicht im allgemeinen mehr Lagen als die Interferenz-Entspiegelungsschicht aufweist und der Farbort empfindlich von den Schichtdicken der Lagen abhängt. Die Vakuumabscheidung bietet hier den Vorteil einer sehr genauen Kontrolle der Schichtdicken. Vorzugsweise kommt dabei Sputtern als Abscheidemethode in Betracht.
   Die weitere, mehrlagige Interferenz-Filterschicht wird unter Einbeziehung der Interferenz-Entspiegelungsschicht vorzugsweise weiterhin so ausgelegt und aufgebracht, daß das Licht in einem an die Kante angrenzenden reflektierenden Wellenlängenbereich mit einer spektralen Breite von zumindest 60 Nanometern zumindest zu im Mittel 75%, vorzugsweise zumindest zu im Mittel 90%, besonders bevorzugt zu im Mittel mehr als 95% reflektiert wird, um eine gute Farbfilterung zu erreichen. Um diesen Reflexionswert zu erzielen, wird das Schichtsystem mit entsprechend vielen Lagen hergestellt. Vorzugsweise enthält dazu die weitere, mehrlagige Interferenz-Filterschicht mindestens 15, vorzugsweise mindestens 20 Lagen, wobei sich erste Lagen mit erstem Brechungsindex und Lagen mit höherem Brechungsindex abwechseln. Für die Interferenz-Entspiegelungsschicht sind zumindest drei, vorzugsweise zumindest vier Lagen, besonders bevorzugt sechs Lagen zur Erzielung einer wirksamen Entspiegelung günstig. Zumindest vier Lagen sind dann günstig, wenn die Entspiegelungsschicht mit abwechselnden hoch- und niedrigbrechenden Schichten hergestellt wird, wobei die hochbrechenden Lagen, ebenso wie die niedrigbrechenden Lagen jeweils gleiche Brechungsindices aufweisen. Solche Schichten lassen sich gut durch Vakuumabscheidung, insbesondere durch Sputtern herstellen. Mit Flüssigbeschichtung können in einfacher Weise auch Mischoxid-Lagen mit mittleren Brechungsindices hergestellt werden. In diesem Fall Fall können gute Entspiegelungen bereits mit drei Lagen erzeugt werden.
   Für die Lagen mit höherem Brechungsindex der Interferenz-Entspiegelungsschicht und der weiteren, mehrlagigen Interferenz-Filterschicht kommen vorzugsweise Titanoxid, Nioboxid, Zirkonoxid, Tantaloxid als hochbrechende Oxide in Betracht. Die Materialien können gegebenenfalls auch als Mischoxide, auch in Verbindung mit anderen Oxiden abgeschieden werden. Für die Lagen mit einem ersten Brechungsindex kommt insbesondere Siliziumoxid (SiO₂) als Material mit vergleichsweise niedrigem Brechungsindex in Betracht.
   Um eine vollständige Farbmischung zu ermöglichen, werden vorzugsweise mehrere erfindungsgemäße Farbfilter hintereinandergeschaltet. Durch geeignete Positionierung der Filter können dann jeweils bestimmte Intensitätsanteile des sichtbaren Frequenzspektrums durch Zurückreflexion ausgefiltert werden. Besonders kritisch hinsichtlich des zu erreichenden Farbortes sind dabei Filter, die zwei Kanten im sichtbaren Spektrum aufweisen. Weicht hier nur eine der Kanten von der berechneten spektralen Position ab, kommt es schnell zu einer merklichen Verschiebung des Farbortes. Besonders kritisch ist dabei auch eine Veränderung des spektralen Verlaufs der Reflektivität in an die Kante angrenzenden reflektierenden Wellenlängenbereichen. Es zeigt sich, daß die Erfindung nicht nur eine vereinfachte Herstellung ermöglicht, sondern, daß auch solche Filter mit zwei Kanten in einem technisch sicher beherrschbaren Produktionsprozessmit gleichbleibenden farblichen Eigenschaften hergestellt werden können. In Weiterbildung der Erfindung ist dazu vorgesehen, daß die weitere, mehrlagige Interferenz-Filterschicht unter Einbeziehung der Interferenz-Entspiegelungsschicht so berechnet und aufgebracht wird, daß ein Farbfilterschichtsystem erhalten wird, welches zwei Kanten im Transmissionsspektrum im sichtbaren Spektralbereich aufweist, wobei eine erste Kante im Bereich zwischen 435 bis 495 Nanometern, vorzugsweise zwischen 440 und 460 Manometern und eine zweite Kante im Bereich zwischen 600 und 640 Nanometern, vorzugsweise zwischen 605 und 630 Nanometern Wellenlänge liegt und wobei das Farbfilterschichtsystem im Wellenlängenbereich zwischen diesen Kanten reflektiert, so daß aus weissem Licht nach Transmission durch den mit dem Farbfilterschichtsystem bedeckten Bereich magentafarbiges Licht erhalten wird.
   Mit diesen Kantenlagen ist dabei im Sinne der Erfindung der 50%-Absolutmesswert in Transmission gemeint, so wie man ihn mit einem Spektrometer direkt messen würde.
   Ein solcher Filter kann dann in Kombination mit einem rotes Licht reflektierenden (einem dadurch Cyan-transmittierenden)und einem blaues Licht reflektierenden (einem dadurch Gelb-transmittierenden) Filter zur vollständigen Farbmischung in einer Beleuchtungseinrichtung eingesetzt werden.
   Es erweist sich außerdem als günstig, wenn die Interferenz-Entspiegelungsschicht und die weitere, mehrlagige Interferenz-Filterschicht jeweils mit Lagen mit einem ersten Brechungsindex und Lagen mit höheren Brechungsindex hergestellt werden, wobei die Lagen mit höherem Brechungsindex der weiteren, mehrlagigen Interferenz-Filterschicht aus einem sich von den Lagen mit höheren Brechungsindex der Interferenz-Entspiegelungsschicht unterscheidendem Material hergestellt werden. Es wurde festgestellt, daß die unterschiedlichen hochbrechenden Materialien zu einer gewissen interferenzoptischen Entkopplung der Schichtsysteme führen, so daß der Farbort des Gesamt-Schichtsystems weniger empfindlich auf produktionsbedingte Schichtdickenschwankungen reagiert.
   Der damit hergestellte Farbfilter zur Erzeugung farbiger Lichtfelder für Beleuchtungszwecke, weist dementsprechend
- auf einem flächigen transparenten Substrat vollflächig eine Interferenz-Entspiegelungsschicht zumindest auf einer Seite, besonders bevorzugt beidseitig auf, wobei
- eine weitere, mehrlagige Interferenz-Filterschicht auf der maskierten Seite abgeschieden ist, welche abwechselnde erste und zweite Lagen umfasst, wobei die ersten Lagen einen ersten Brechungsindex und die zweiten Lagen einen zweiten Brechungsindex aufweisen, der höher ist als der erste Brechungsindex der ersten Lagen, und wobei
- die Interferenz-Entspiegelungsschicht zumindest eine erste und eine zweite Lage aufweist, wobei der Brechungsindex der zweiten Lage höher ist als der Brechungsindex der ersten Lage, und wobei
- sich die Materialien der zweiten Lagen der weiteren, mehrlagigen Interferenz-Filterschicht und der zweiten Lage der Interferenz-Entspiegelungsschicht unterscheiden, und wobei
- die Schichtdicken der weiteren, mehrlagigen Interferenz-Filterschicht unter Einbeziehung der darunterliegenden Interferenz-Entspiegelungsschicht so ausgelegt sind, daß die weitere, mehrlagige Interferenz-Filterschicht zusammen mit der Interferenz-Entspiegelungsschicht ein Farbfilterschichtsystem ergibt, welches zumindest eine Kante im Transmissionsspektrum im sichtbaren Spektralbereich aufweist, welche einen reflektierenden Wellenlängenbereich von einem Wellenlängenbereich trennt, innerhalb welchem Licht durch das Farbfilterschichtsystem transmittiert wird, und wobei
- die weitere, mehrlagige Interferenz-Filterschicht zumindest einen ersten Bereich des Substrats bedeckt und zumindest einen zweiten Bereich freilässt und der zweite Bereich aufgrund der Interferenz-Entspiegelungsschicht entspiegelt ist.

Bei einer Beleuchtungseinrichtung mit einem solchen Farbfilter, beziehungsweise einem Farbfilter, wie er mit dem erfindungsgemäßen Verfahren erhalten wird, sind dann mehrere, vorzugsweise drei solcher Farbfilter hintereinander entlang des Strahlengangs angeordnet wobei die Farbfilter Kanten an jeweils unterschiedlichen Stellen des sichtbaren Spektralbereiches aufweisen. Mit den Farbfiltern kann dann für die verschiedenen Farben jeweils die Farbsättigung variiert werden, so daß eine beliebige Farbe mit beliebiger Farbsättigung eingestellt werden kann.

Gemäß einer Weiterbildung dieser Ausführungsform wird eine Interferenz-Entspiegelungsschicht mit Zirkoniumoxid oder Titanoxid enthaltenden Lagen mit höherem Brechungsindex und eine weitere, mehrlagige Interferenz-Filterschicht mit Nioboxid, insbesondere Niobpentoxid enthaltenden Lagen mit höherem Brechungsindex aufgebracht. Bei einem magentafarbenen Filter konnte hier eine signifikant verringerte Empfindlichkeit des Farborts, beziehungsweise der spektralen Lage der Kanten gegenüber Schichtdickenschwankungen nachgewiesen werden.

Um eine variable Farbsättigung mit dem Filter zu ermöglichen, ist weiterhin vorgesehen, daß das Farbfilterschichtsystem auf zahnförmigen, sich entlang der Längsrichtung verjüngenden, nebeneinander verlaufenden Bereichen auf dem Substrat angeordnet ist, so daß aufgrund der Verjüngung der nebeneinander verlaufenden Bereiche die nur mit der Entspiegelungsschicht versehenen Bereiche eine in Richtung entlang der Zähne variable Breite aufweisen. Das Substrat kann zusätzlich einen Ausschnitt aufweisen, um den Farbfilter so in den Strahlengang einer Beleuchtungseinrichtung stellen zu können, daß das Licht zumindest teilweise durch den Ausschnitt hindurch gelangt.

Die zahnförmigen Bereiche können kreisförmig oder spiralförmig gekrümmt um einen Drehpunkt herum verlaufen. Damit ist eine leichte Einstellung der gewünschten Farbsättigung durch Rotation des Filters möglich. Besonders zweckmäßig ist hierbei ein Substrat mit kreisförmiger Grundform. Alternativ kann aber auch eine translatorische Bewegung zur Einstellung der Farbsättigung realisiert werden. In diesem Fall können die zahnförmigen Bereiche beispielsweise geradlinig verlaufen. Zweckmäßig ist in allen Fällen, daß zumindest eine Komponente der Längsrichtung der zahnförmigen Bereiche in Bewegungsrichtung des Substrats bei Einstellung der Farbsättigung liegt.

Um eine möglichst hohe Unempfindlichkeit des Farborts des Gesamt-Schichtsystems gegenüber individuellen, herstellungsbedingten Dickenschwankungen einzelner Lagen zu erhalten, kann zur Auslegung der Schichten die Schichtdickensensitivität erster Ordnung berechnet werden. Ist diese für bestimmte Lagen positiv und betragsmäßig hoch, beeinflussen diese Lagen den Farbort überproportional, wenn deren Schichtdicke von der berechneten Schichtdicke abweicht.

Zur Berechnung der Schichtdicken des Farbfilterschichtsystems ist es weiterhin sinnvoll, unter Vorgabe und Festhalten der Schichtdicken der mehrlagigen Entspiegelungsschicht die Schichtdicken der übrigen Lagen, beziehungsweise der Lagen der weiteren, mehrlagigen Interferenz-Filterschicht zu berechnen. Dies erlaubt es dann, von vorhandenen entspiegelten Substraten und einem bereits erprobten und eingefahrenen Herstellungsprozess für die Entspiegelungsschicht auszugehen.

Die Erfindung wird nachfolgend anhand von Ausführungsbeispielen und unter Bezugnahme auf die beigeschlossenen Zeichnungen näher erläutert. Gleiche Bezugszeichen in den Zeichnungen bezeichnen dabei gleiche oder entsprechende Teile. Es zeigen:
Fig. 1 eine schematische Querschnittansicht eines erfindungsgemäß hergestellten Farbfilters,
Fig. 2 zum Vergleich einen Farbfilter mit strukturierter Entspiegelungsschicht,
Fig. 3 eine Aufsicht auf einen Farbfilter mit kreisförmiger Grundform,
Fig. 4 ein Schema eines Scheinwerfers mit einem Satz einstellbarer Farbfilter,
Fig. 5 verschiedene Spektralverläufe der Transmission eines Magenta-Farbfilter-Designs mit Nb₂O₅ als hochbrechendem Material und darunterliegender Entspiegelungsschicht ebenfalls mit Nb₂O₅ als hochbrechendem Material,
Fig. 6 berechnete Werte der relativen Empfindlichkeit der einzelnen Lagen eines Farbschichtsystems gegenüber Schichtdickenschwankungen mit untenliegender sechslagiger Entspiegelungsschicht,
Fig. 7 berechnete Werte der relativen Empfindlichkeit der einzelnen Lagen eines entsprechenden Farbschichtsystems gegenüber Schichtdickenschwankungen mit obenliegender sechslagiger Entspiegelungsschicht
Fig. 8 berechnete Werte der relativen Empfindlichkeit der einzelnen Lagen eines Farbschichtsystems gegenüber Schichtdickenschwankungen mit untenliegender sechslagiger Entspiegelungsschicht, wobei die Materialien der hochbrechenden Lagen der Entspiegelungsschicht und der weiteren, mehrlagigen Interferenzfilterschicht unterschiedlich sind.
Fig. 9 zum Vergleich mit Fig. 8 berechnete Werte der relativen Empfindlichkeit der einzelnen Lagen eines Farbschichtsystems gegenüber Schichtdickenschwankungen mit obenliegender sechslagiger Entspiegelungsschicht, wobei die Materialien der hochbrechenden Lagen der Entspiegelungsschicht und der weiteren, mehrlagigen
Interferenz-Filterschicht unterschiedlich sind,
Fig. 10 berechnete Werte der relativen Empfindlichkeit der einzelnen Lagen der weiteren, mehrlagigen Interferenz-Filterschicht ohne Entspiegelungsschicht,
Fig. 11 Spektralkurven analog der Darstellung in Fig. 5, jedoch mit ZrO₂ als hochbrechendes Material in der Entspiegelungsschicht anstelle von Nb₂O₅,
Fig. 12 das Ergebnis aus 200 einzelnen Berechnungen von Farbortschwankungen für zwei Farbschichtsysteme mit erfindungsgemäßen untenliegenden Entspiegelungsschichten, die in einem Fall Niob- und im anderen Fall Zirkon-basierte hochbrechende Schichten aufweisen, und
Fig. 13 zum Vergleich die gleiche Berechnung für Farbschichtsysteme mit entsprechenden, obenliegenden Entspiegelungsschichten.

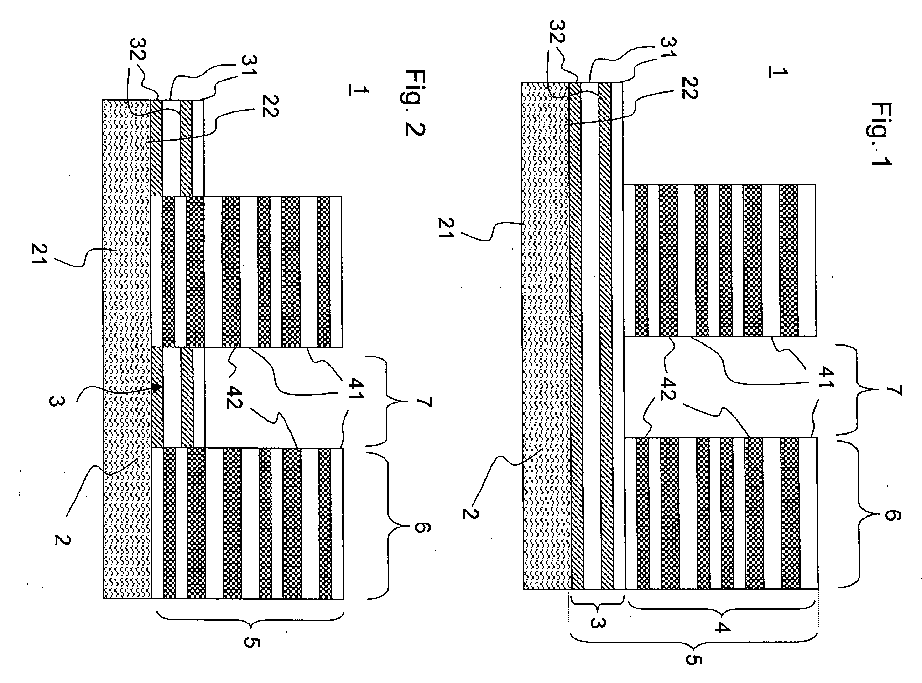

Das Prinzip eines erfindungsgemäß hergestellten Farbfilters 1 mit einem entspiegelten Substrat 2 ist in Fig. 1 dargestellt. Hierbei ist das Substrat 2 zuerst vollflächig mindestens einseitig, bevorzugt aber beidseitig, entspiegelt worden und das Farbfilter-Schichtsystem anschließend nach dem Maskierungsprozess an durch die Maskierung vorgegebenen Stellen aufgebracht worden.

Bei dem in Fig. 1 gezeigten Beispiel ist auf dem scheibenförmigen Substrat 2 mit Seiten 21, 22 die Interferenz-Entspiegelungsschicht 3 beispielhaft nur auf der Seite 22 aufgebracht. Die Interferenz-Entspiegelungsschicht 3 umfasst mehrere abwechselnd angeordnete erste und zweite Lagen 31, 32. Dabei weisen die Lagen 32 einen höheren Brechungsindex als die ersten Lagen 31 auf. Für die ersten Lagen 31 kann beispielsweise Siliziumoxid als niedrigbrechendes Schichtmaterial eingesetzt werden.

Auf dieser Seite 22 wird das Substrat 2 dann mit einer Maskierung versehen, welche Bereiche 7 der Seite 22 abdeckt. Anschließend wird eine weitere, mehrlagige Interferenz-Filterschicht 4 auf der maskierten Seite 22 abgeschieden, welche abwechselnde erste und zweite Lagen 41, 42 umfasst, wobei die ersten Lagen 41 einem ersten Brechungsindex und die zweiten Lagen 42 einen zweiten Brechungsindex aufweisen, der sich vom ersten Brechungsindex der ersten Lagen 41 unterscheidet. Auch hier ist der Brechungsindex der zweiten Lagen 42 höher als der Brechungsindex der ersten Lagen 41.

Die Schichtdicken der weiteren, mehrlagigen Interferenz-Filterschicht 4 werden unter Einbeziehung der darunterliegenden Interferenz-Entspiegelungsschicht (3) so ausgelegt, daß die weitere, mehrlagige Interferenz-Filterschicht 4 zusammen mit der Interferenz-Entspiegelungsschicht 3 ein Farbfilterschichtsystem 5 ergeben. Dieses Farbfilterschichtsystem 5 weist zumindest eine Kante im Transmissionsspektrum im sichtbaren Spektralbereich auf, welche einen reflektierenden Wellenlängenbereich von einem Wellenlängenbereich trennt, innerhalb welchem Licht durch das Farbfilterschichtsystem transmittiert wird. Um alle Farben des sichtbaren Lichts mit variabler Farbsättigung erzeugen zu können, können dann mehrere solcher Farbfilter 1 hintereinandergeschaltet werden, wobei die Farbfilter dabei jeweils unterschiedliche Farben ausfiltern.

Nach dem Abscheiden der weiteren, mehrlagigen Interferenz-Filterschicht 4 wird dann die Maske zusammen mit den auf der Maske vorhandenen Teilen der abgeschiedenen mehrlagigen Beschichtung entfernt. Dadurch wird eine strukturierte Filterschicht 4 erhalten, welche erste Bereiche 6 des Substrats 2 bedeckt und zweite Bereiche 7 freilässt. Die freigelassenen zweiten Bereiche sind dann aufgrund der Interferenz-Entspiegelungsschicht 3 entspiegelt.

Als Schichtmaterialien für die Schichten 32 und 42 kommen unter anderem Titanoxid, Nioboxid, Zirkonoxid, Tantaloxid und deren Mischoxide in Betracht. Die Schichten 32 können sich dabei auch in ihrer Zusammensetzung von den Schichten 42 unterscheiden, wie in Fig. 1 auch durch die unterschiedlichen Schraffuren dargestellt ist. So ist es zum Beispiel auch möglich, in der AR-Beschichtung TiO₂ als hochbrechendes Material einzusetzen, in dem Schichtsystem 4 aber ZrO₂ und/oder Nb₂O₅, wenn dieses prozesstechnische oder kostenmäßige Vorteile hat. Ebenfalls können aber auch ZrO₂ in der Entspiegelungsschicht 3 und TiO₂ und/oder Nb₂O₅ in dem Farbfilterstack 4 eingesetzt werden.

Die Interferenz-Entspiegelungsschicht 3 kann in einer ersten Beschichtungsanlage großtechnisch entspiegelt werden. Es kann sich hier um den gleichen Typ von Beschichtungsprozess handeln, wie er in einer zweiten Anlage zum Aufbringen der Farbfilterschicht eingesetzt wird. So können beispielhaft für beide InterferenzSchichtsysteme Sputteranlagen eingesetzt werden, so dass auf eine gesputterte Entspiegelungsschicht anschließend die weitere, mehrlagige Interferenzschicht ebenfalls durch Sputtern aufgebracht wird.

Es kann sich in beiden Fällen aber auch jeweils um eine Aufdampfanlage zur Elektronenstrahlverdampfung oder zur thermischen Verdampfung oder zur ionenunterstützten Beschichtung handeln. Auch der Einsatz von CVD-Prozessen oder von Sol-Gel-Prozessen wie z.B. Tauchziehen ist denkbar.

Es ist auch möglich, dass die Entspiegelung mit einer anderen Art von Beschichtungsprozess vorgenommen wird als der anschließende Beschichtungsprozess des Farbfilterstacks. So ist es prinzipiell möglich, jedes der genannten Beschichtungsverfahren mit einem anderen der genannten Verfahren zu kombinieren.

In Fig. 2 ist zum Vergleich ein herkömmlich hergestellter Farbfilter 1 auf einem entspiegelten Substrat 2 schematisch dargestellt. Hierbei wird nach einem ersten Maskierungsprozess zuerst die Entspiegelungsschicht 3 an durch die Maskierung freigelassenen Bereichen 7 auf dem Substrat aufgebracht. Nach dem Entfernen der ersten Maskierung wird ein zweiter Maskierungsschritt durchgeführt, welcher eine zu der ersten Maskierung komplementäre Form hat und damit gerade die Bereiche 7 abdeckt, die im ersten Maskierungsschritt frei geblieben waren. Mit der Maskierung wird der zweite Beschichtungsprozess des Aufbringens des gewünschten Original-Farbfilterdesigns durchgeführt. Entspiegelte Bereiche 7 und Bereiche 6, die mit dem Farbfilter beschichtet sind, liegen somit auf dem Substrat 2 an vorgegebenen Stellen völlig getrennt nebeneinander vor. Die Reihenfolge der beiden Beschichtungsprozesse mit den jeweils zugehörigen Maskierungsprozessen kann dabei auch umgekehrt werden, da die beiden Beschichtungsvorgänge im Gegensatz zum erfindungsgemäß beschichteten Substrat voneinander unabhängig sind. Dafür müssen hier jedoch zwei Maskierungsvorgänge durchgeführt werden, während bei dem kombinierten Maskierungs- und Beschichtungsverfahren gemäß der Erfindung nur ein Maskierungsprozess notwendig ist.

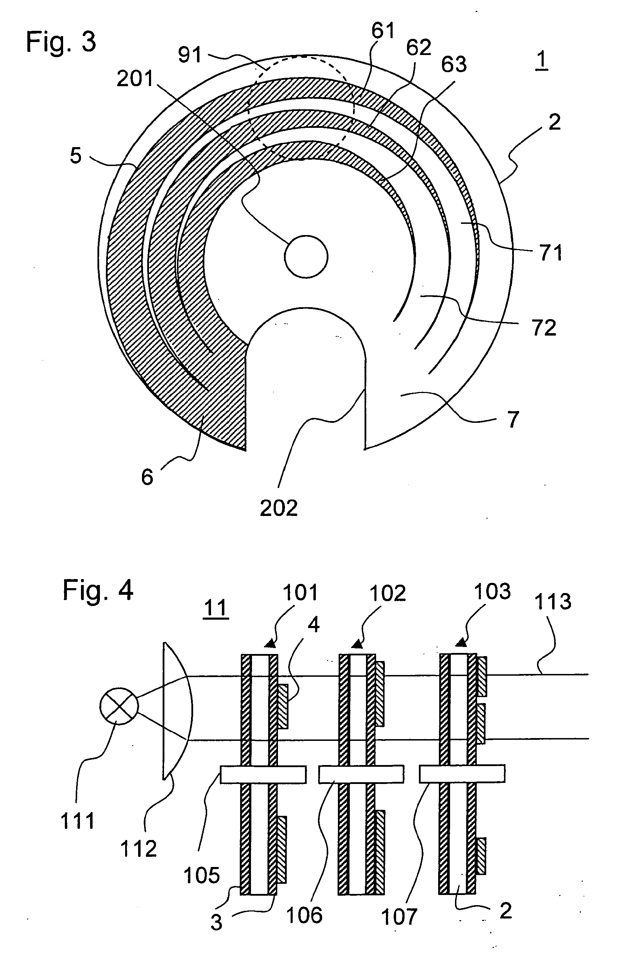

Fig. 3 zeigt ein Ausführungsbeispiel eines Farbfilters 1 mit kreisförmigem Substrat 2. Das Substrat 2 weist eine mittige Öffnung 201 auf, mit welcher der Farbfilter auf einer Achse drehbar um seinen Mittelpunkt gehaltert werden kann. Am Rand des scheibenförmigen Substrats 2 ist außerdem ein Ausschnitt 202 vorhanden. Der Farbfilter 1 kann dann so positioniert werden, daß das Licht der Beleuchtungsquelle durch den Ausschnitt hindurchgeht. Dies ist beispielsweise dann sinnvoll, wenn vollständig weisses Licht erzeugt werden soll.

Das Farbfilterschichtsystem 5 bedeckt einen Bereich 6 der Substratoberfläche, welcher zahnförmige, sich entlang ihrer Längsrichtung verjüngende, nebeneinander verlaufende Teilbereiche 61, 62, 63 aufweist. Aufgrund der Verjüngung der nebeneinander verlaufenden Bereiche 61, 62, 63 weisen die nur mit der Entspiegelungsschicht versehenen Teilbereiche 71, 72 des Bereichs 7 eine in Richtung entlang der Zähne variable Breite auf. Die Teilbereiche 61, 62, 63, beziehungsweise die Teilbereiche 71, 72 verlaufen spiralförmig gekrümmt um den Mittelpunkt der Öffnung 210, also dem Drehpunkt des Filters herum. Entlang der Umfangsrichtung um den Mittelpunkt herum variieren aufgrund der Verjüngung der zahnförmigen Bereiche 61, 62, 63 die Flächenanteile der Bereiche 6 und 7. Vom Scheinwerfer wird ein Bereich 91 des Substrats beleuchtet. Durch Rotation des Farbfilters um den Mittelpunkt läßt sich dann die gewünschte Farbsättigung je nach den im Bereich 91 gegebenen Anteilen der Bereiche 6 und 7 einstellen. Bei der in Fig. 3 gezeigten Position wäre beispielsweise eine Farbsättigung von etwa 50% gegeben. Bei einer Drehung um 180° würde der ausgeleuchete Bereich 91 mit dem Ausschnitt 202 zusammenfallen, so daß das Licht nicht gefiltert wird.

Fig. 4 zeigt zur weiteren Verdeutlichung ein Schema eines Teils eines Scheinwerfers 11 mit mehreren erfindungsgemäßen, beidseitig entspiegelten Farbfiltern 101, 102, 103. Mit einer Kondensorlinse 112 wird aus dem Licht einer Beleuchtungsquelle 111, beispielsweise einer Hochdruck-Entladungslampe ein Parallelstrahl 113 erzeugt. Die Farbfilter 101, 102, 103 sind so angeordnet, daß der Parallelstrahl jeweils einen Bereich zwischen den Achsen 105, 106, 107 und dem Rand der Farbfilter 101, 102, 103 ausleuchtet. Die Farbfilter 101, 102, 103 sind mittels der Achsen 105, 106, 107 individuell drehbar, so daß jeweils eine gewünschte Farbsättigung einstellbar ist. Jeder der Farbfilter reflektiert einen bestimmten, unterschiedlichen Teil des sichtbaren Spektrums, beziehungsweise erzeugt einen sich von den anderen Farbfiltern unterscheidenden Farbton. Geeignet ist dabei ein Satz von Farbfiltern, die als Cyan-, Magenta- und Gelb-Filter ausgebildet sind.

Ein durchgerechnetes Beispiel hat gezeigt, dass es prozesstechnische Vorteile bringen kann, wenn das AR-Schichtsystem ein anderes hochbrechendes Material enthält als der Farbfilterstack. Hierzu wurde von einem Magenta-Farbfilterdesign ausgegangen, wie es in ähnlicher Form auf Farbrädern von Bühnenscheinwerfern Anwendung findet. Als hochbrechendes Material in diesem Magenta-Filter wurde in diesem Fall Nb₂O₅ gewählt.

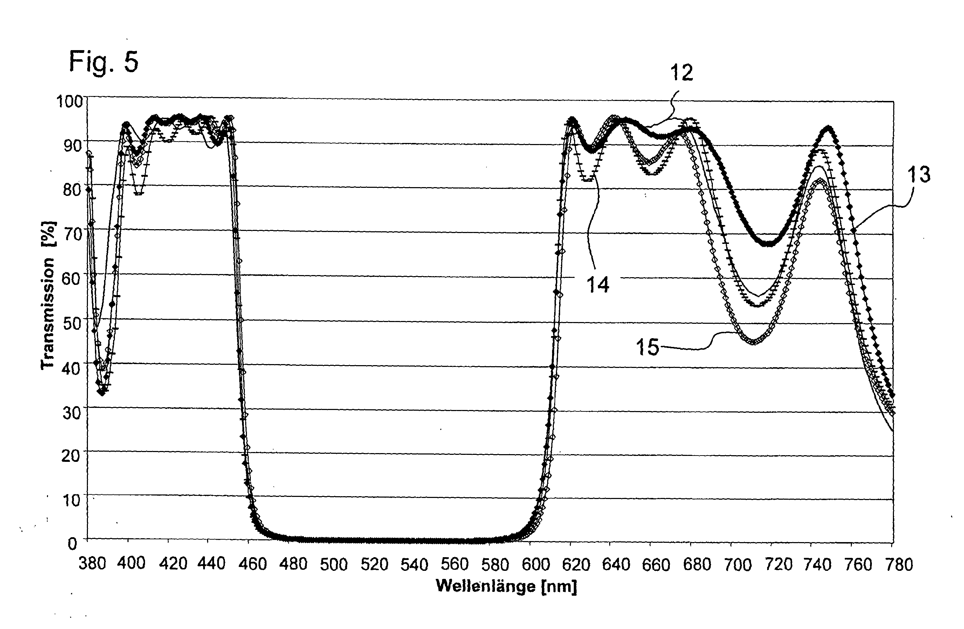

In Fig. 5 ist der Spektralverlauf 15 dieses beispielhaft gewählten Magenta-Designs zu sehen.

Unter dieses Original-Farbfilterdesign wurde dann in einem Berechnungsprogramm für optische Dünnschichten (in diesem Fall TFCalc, es kann aber auch ein anderes Dünnschichtprogramm wie beispielsweise Essential Macleod eingesetzt werden) ein beispielhaft ausgewähltes Entspiegelungsdesign, im ersten betrachteten Fall ebenfalls mit Nb₂O₅ als hochbrechendes Material, gelegt.

Das Original-Farbfilterdesign mit den darunter befindlichen AR-Schichten in einem gemeinsamen Schichtaufbau können zusammen den vorher vorhandenen Farbort des Original-Magentadesigns nicht mehr erreichen, da die jetzt unten liegenden AR-Schichten mit der darüber liegenden Schichtfolge des Original-Magentadesigns interferieren und infolgedessen der Farbort des gemeinsamen Schichtpaketes gegenüber dem Ausgangswert verschoben wird. Dieses ist aus dem in der Fig. 5 ebenfalls gezeigten Spektralverlauf 12 des fix gehaltenen Original-Magentadesigns gemeinsam mit den darunter befindlichen AR-Schichten zu entnehmen, da sich der Spektralkurvenverlauf in diesem Fall von dem des Original-Magentadesigns ohne AR-Schichten (Spektralverlauf 15) deutlich unterscheidet.

Um den ursprünglich gewünschten Farbort des Original-Magentadesigns auch in dem Fall der unten drunter liegenden AR-Schichten wieder erreichen zu können, müssen die Schichten des aufzubringenden Farbfilterstacks angepasst werden. Hierzu werden die Schichten des AR-Schichtsystems in der Schichtdickenabfolge im Dünnschichtprogramm festgehalten, während die Schichten des aufzubringenden Farbfilters, also die Schichten des Original-Magentadesigns, zur Optimierung freigegeben werden. Nach erfolgter Optimierung befindet sich auf dem ursprünglichen AR-Schichtsystem ein abgeänderter Farbfilterstack, entsprechend der optimierten weiteren, mehrlagigen Interferenz-Filterschicht, welcher zusammen mit den unterliegenden Schichten der Entspiegelungsschicht nun gerade wieder den gewünschten ursprünglichen Farbort erreicht, wenn die Vorgaben im Optimierungsprogramm entsprechend eingestellt waren.

Die Spektralkurve wird nach der Optimierung der ursprünglichen Form des Original-Farbfilterdesigns zumindest im für das menschliche Auge relevanten Teil des sichtbaren Bereichs des Spektrums wieder sehr ähneln, sofern die Zielbedingungen in der Optimierungsroutine entsprechend eingestellt waren. Die sich nach der erfolgten Optimierung ergebende Spektralkurve 13 ist in der Fig. 5 dargestellt.

Ebenfalls in Fig. 5 ist gezeigt, wie der Spektralverlauf des optimierten Farbfilterstacks ohne die darunter befindlichen AR-Schichten aussehen würde (Spektralverlauf 14). Dieser Farbfilterstack für sich alleine auf ein nicht entspiegeltes Substrat aufgebracht würde den gewünschten Farbort ebenfalls nicht erreichen, wie man aus den starken wellenförmigen Schwankungen des Spektralverlaufs erahnen kann. Nur in Kombination mit dem vorher aufgebrachten vorgegebenen Entspiegelungsdesign ist der nachträglich aufgebrachte Farbfilterstack in der Lage, den gewünschten Farbort zu erreichen. Das Aufbringen eines an das jeweils eingesetzte unterliegende Entspiegelungsdesign speziell angepassten Farbfilterdesigns ist somit essentieller Bestandteil dieser Erfindung.

Das Erreichen des ursprünglich vorgegebenen Farbortes des gemeinsamen Schichtpaketes ist aber nicht ausreichend für eine technische Realisierung des gesamtem Prozesses. Ebenso ist es wichtig, neben dem theoretisch richtigen Farbort im Idealfall, wenn also alle einzelnen Schichten mit der für sie theoretisch exakt richtigen Schichtdicke abgeschieden worden sind, auch in dem Gesamtschichtpaket 5 keine allzu starke Empfindlichkeit des Farbortes gegenüber individuellen Schichtdickenschwankungen zu haben. Hierzu ist es von Bedeutung, wie die Schichten des zusätzlich aufgebrachten AR-Designs mit den Schichten des nachträglich aufgebrachten Farbfilterstacks wechselwirken.

Zur Bestimmung der Empfindlichkeit der einzelnen Schichten eines Schichtpaketes ist es möglich, die sog. "First Order Layer Sensitivity" zu berechnen. Diese Eigenschaft der individuellen Schichten eines Schichtpakets beschreibt, wie weit in der Zielfunktion (der sogenannten "merit function") der Zielwert bei einer kleinen Schichtdickenänderung der betreffenden individuellen Schicht von dem gefundenen Minimum (im Fall des Optimums) abweicht.

Die Zielfunktion setzt sich dabei aus den für die Optimierung vorgegebenen einzelnen Zielen, z.B. Zielwerte wie spektrale Transmissions- oder Reflexionswerte für bestimmte Wellenlängen oder Wellenlängenbereiche oder Farbortziele (Farbortkoordinaten für eine bestimmte Beleuchtungsquelle) zusammen.

Im Fall der auf ein fest vorgegebenes AR-Schichtpaket aufgebrachten Farbfilterstacks befindet sich das Gesamtschichtpaket jedoch nicht im gesamten Minimum der Zielfunktion, da die ersten zur Entspiegelung gehörigen Schichten in dem Optimierungsprozess nicht zur Optimierung freigegeben werden. Vielmehr werden die Schichtdicken der mehrlagigen Entspiegelungsschicht vorgegeben und festgehalten und dann die Schichtdicken der übrigen Lagen, beziehungsweise der Lagen der weiteren, mehrlagigen Interferenz-Filterschicht berechnet.

Daher wird nur die Schichtdicken-Sensitivität erster Ordnung ("First Order Layer Sensitivity") und nicht die Schichtdickensensitivität zweiter Ordnung ("Second Order Layer Sensitivity") berechnet, welche nur im Fall eines komplett optimierten Schichtdesigns, in welchem alle Schichten vollständig bis zu Ende optimiert werden konnten, Sinn machen würde.

Die Höhe der Absolutangaben der Schichtdicken-Sensitivität erster Ordnung hat dabei keine direkte Bedeutung, da sie von der Anzahl und "Härte" (Toleranz) der eingegebenen Einzelziele abhängt. Nur die relative Höhe dieser Angabe der einzelnen Schichten zueinander hat eine Bedeutung und gibt die Höhe der "relativen Empfindlichkeit" der einzelnen Schichten im Schichtpaket bezogen auf die Gesamtheit der eingegebenen Ziel an. Dabei bedeuten hohe positive Werte eine relativ starke Verschlechterung der Güte- oder Leistungsfunktion ("merit function"), während hohe negative Werte eine relative Verbesserung der Leistungsfunktion darstellen.

Hohe negative Werte bedeuten jedoch nicht, dass dieses Schichtsystem in der Produktion stabil gefahren werden kann, sondern es besagt nur, dass bei auftretenden individuellen Schwankungen dieser betreffenden Schichten die Abweichungen nicht gerade fatalerweise in die falsche Richtung, also insbesondere weg vom gewünschten Farbort, führen. Trotzdem bedeuten hohe Werte, selbst hohe negative Werte, immer eine starke Schwankung des Zielwertes und damit insbesondere des vorgegebenen Farbortes. Sehr hohe negative Werte sind jedoch im allgemeinen nur für die Schichten im Gesamtschichtsystem zu erwarten, die im Optimierungsprozess nicht freigegeben wurden, im Falle der Erfindung also für die Schichten des AR-Stacks.

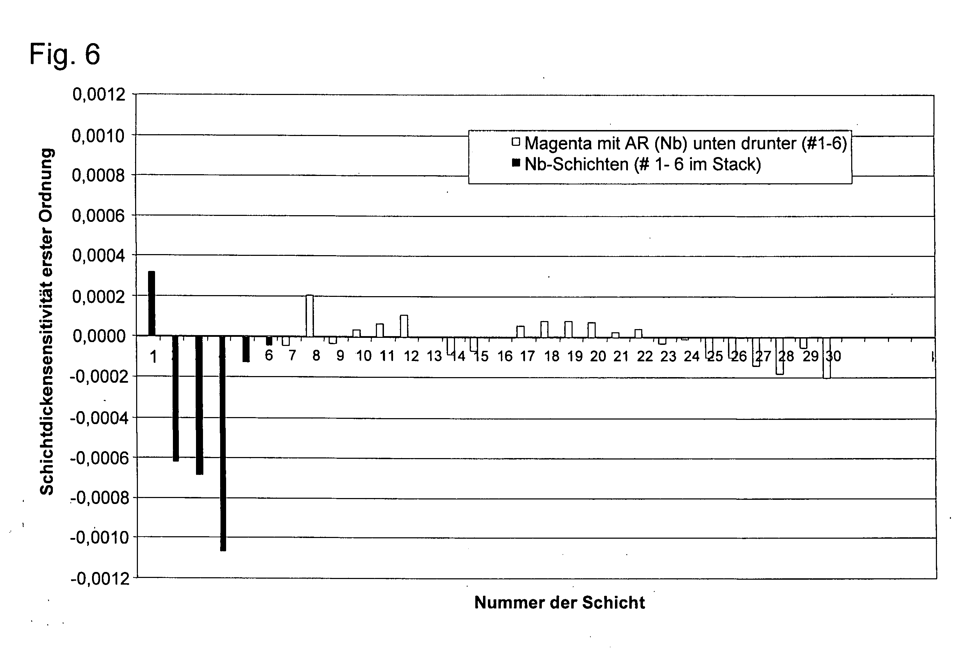

Fig. 6 zeigt die auf diese Weise berechneten Werte der relativen Empfindlichkeit der einzelnen Schichtdicken des auf einem auf Nb-Basis vorgegebenen, auf dem Substrat und unter der weiteren mehrlagigen Interferenz-Filterschicht liegenden Interferenz-Entspiegelungsschicht (Schichten mit den Indices 1 bis 6 des Gesamtschichtsystems, beziehungsweise des Farbfilterschichtsystems mit insgesamt 30 Lagen). Die Schicht mit dem Index 1 ist dabei die unterste, auf dem Substrat angeordnete Schicht und die Schicht mit dem höchsten Index, also die Schicht mit der Nummer 30 ist die oberste Schicht des Farbfilterschichtsystems.

Man erkennt, dass die Werte größtenteils negativ, aber relativ hoch in ihrem Absolutwert, im Vergleich zu den durchschnittlich niedrigeren Werten der Schichten des Farbfilterstacks (Schichten mit Indices 7 bis 30) sind. Damit wird dieses Gesamtdesign zwar nicht sehr empfindlich, aber auch noch nicht extrem unempfindlich gegenüber individuellen Schichtdickenschwankungen insbesondere der ersten sechs Schichten des Entspiegelungsdesigns.

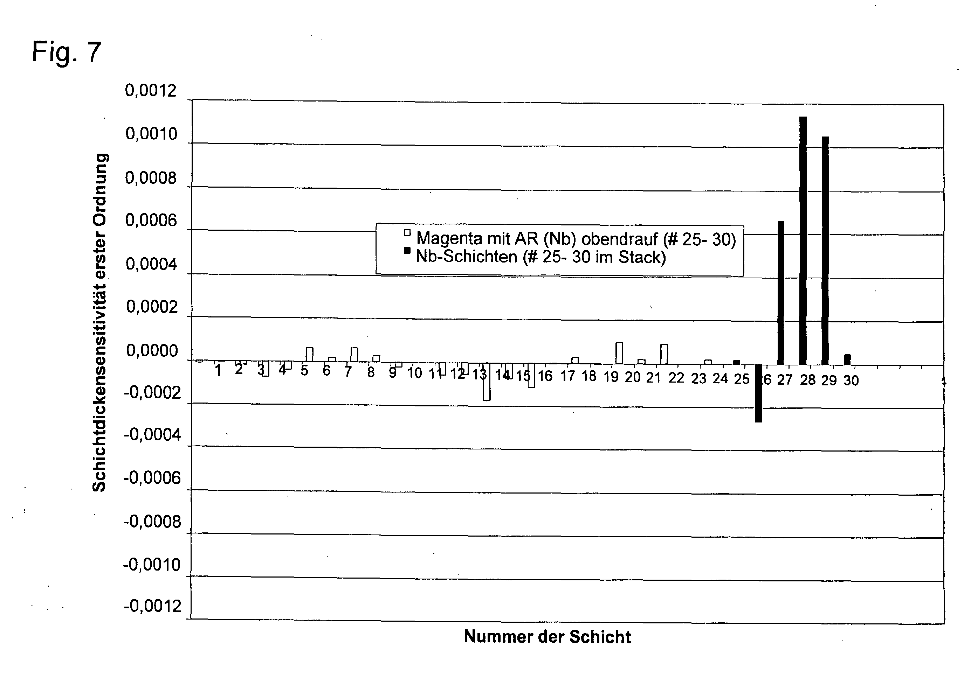

Fig. 7 zeigt zum Vergleich die relative Schichtdickenempfindlichkeit des Magenta-Designs, auf welches im Unterschied zur Erfindung nachträglich die sechs Schichten des Entspiegelungsdesigns aufgebracht worden sind. Es handelt sich hierbei um dasselbe AR-Schichtdesign auf Nb-Basis wie im Fall der Fig. 6.
In diesem Fall sind jedoch die Schichten # 25 - 30 des AR-Schichtpaketes bei der Durchführung der Optimierung festgehalten worden und die Schichten # 1 - 24 entsprechend freigegeben worden. Fig. 7 zeigt, dass auch in diesem Fall die Schichtdickenempfindlichkeit der AR-Schichten relativ hoch ist im Vergleich zur Empfindlichkeit der Schichten des Farbfilterstacks im Gesamtschichtsystem, aber diesmal zeigen die individuellen Schichten des AR-Stacks durchschnittlich sogar sehr hohe positive Werte. Damit wäre für ein solches Gesamtschichtsystem zu erwarten, dass es auf kleine individuelle Schwankungen der Einzelschichten des AR-Stacks sehr ungünstig reagiert und dass damit insbesondere ein eng vorgegebener Farbort des Gesamtschichtsystem nur sehr schwer einzuhalten wäre.

Der Vergleich zeigt daher, daß eine zuerst aufgebrachte Interferenz-Entspiegelungsschicht gegenüber einer nachträglich auf einer mehrlagigen Interferenz-Filterschicht abgeschiedenen Entspiegelungsschicht deutliche Vorteile hinsichtlich einer gleichbleibenden Produktqualität bringt.

Die beiden bisher betrachteten Fälle gingen von einem Entspiegelungsdesign mit Nb₂O₅ als hochbrechendes Material aus, welches mit einem ebenfalls auf Basis von Nb₂O₅ aufgebauten Farbfilterstack kombiniert wurde. Das niederbrechende Material war dabei wie üblich SiO₂.

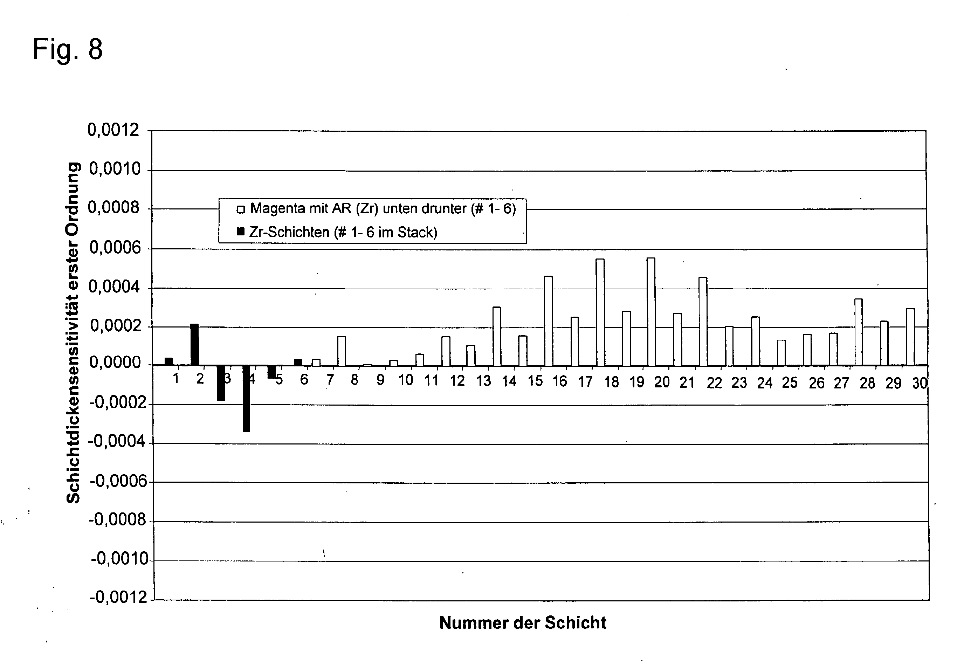

Fig. 8 zeigt das Ergebnis der Berechnung der Schichtdickenempfindlichkeit eines auf ZrO₂ als hochbrechendes Material basierenden Entspiegelungsdesigns. Es handelt sich hierbei ebenfalls um ein 6-Schichter-Antireflex-Design wie im Fall vorher mit Nb₂O₅ als hochbrechendes Material. Das Material der hochbrechenden Schichten des Schichtstapels der Lagen 7 bis 30 ist wie bei den Beispielen der Fig. 6 und 7 ebenfalls Nb₂O₅. Mithin weisen bei dem in Fig. 8 gezeigten Beispiel die Interferenz-Entspiegelungsschicht und die weitere, mehrlagige Interferenz-Filterschicht jeweils Lagen mit einem ersten Brechungsindex und Lagen mit höheren Brechungsindex auf, wobei aber die Lagen mit höherem Brechungsindex der weiteren, mehrlagigen Interferenz-Filterschicht aus einem sich von den Lagen mit höheren Brechungsindex der Interferenz-Entspiegelungsschicht unterscheidendem Material hergestellt werden.

Wie überraschenderweise festzustellen ist, sind die Werte von der Höhe her viel niedriger als die Werte in den beiden vorherigen Fällen und die Werte liegen eher bei negativen als bei positiven Werten. Eine grobe Schätzung lässt erkennen, dass die Höhe der "First Order Layer Sensitivity"-Werte in diesem Fall wohl nur etwa ein Drittel der durchschnittlichen Höhe in den beiden anderen Fällen aufweist. Damit ist ein solches Design in der Praxis bei eng vorgegebenen Vorgaben des Gesamtschichtsystems, insbesondere bei engen Farbortvorgaben, deutlich stabiler zu produzieren als die Niob-basierten Designs in den beiden vorherigen Fällen der Fig. 6 und 7.

Die Fig. 6 und 8 illustrieren folgende, allgemein ohne Beschränkung auf die in den Figuren gezeigten Beispiele geltende Eigenschaften besonders vorteilhaft weitergebildeter erfindungsgemäßer Schichtdesigns:
- das Maximum der Schichtdickensensitivität erster Ordnung aller Lagen der mehrlagigen Entspiegelungsschicht ist kleiner als das Maximum der Schichtdickensensitivität erster Ordnung aller Lagen der weiteren, mehrlagigen Interferenz-Filterschicht. Bei dem gezeigten Beispiel weist die Lage mit dem Index 2 die höchste Schichtdickensensitivität erster Ordnung unter den Lagen 1 bis 6 der Interferenz-Entspiegelungsschicht auf. Dieser Wert ist geringer als etwa der Wert der Lagen 18 und 20. Im übrigen sind die Schichtdickensensitivitäten der Interferenz-Entspiegelungsschicht sogar auch betragsmäßig kleiner als der Maximalbetrag der Schichtdickensensitivitäten der weiteren mehrlagigen Interferenz-Filterschicht.
- Auch der Mittelwert der Schichtdickensensitivität erster Ordnung ist für die Lagen der Interferenz-Entspiegelungsschicht niedriger als der Mittelwert der Schichtdickensensitivität erster Ordnung für die Lagen der weiteren, mehrlagigen Interferenz-Filterschicht. Dies gilt für das in Fig. 6 gezeigte Beispiel mit gleichen hochbrechenden Materialien ebenso wie bei dem in Fig. 8 gezeigten Beispiel.
   Für das in Fig. 8 gezeigte Beispiel mit unterschiedlichen hochbrechenden Materialien in der Entspiegelungsschicht und der weiteren mehrlagigen Interferenzschicht gilt dies außerdem auch für den Betrag des Mittelwerts.
   Demgemäß sieht die Erfindung im Hinblick auf diese Merkmale auch einen Farbfilter 1 zur Erzeugung farbiger Lichtfelder für Beleuchtungszwecke vor, welcher
- auf einem flächigen transparenten Substrat 2 vollflächig eine Interferenz-Entspiegelungsschicht 3 zumindest auf einer Seite 21, 22, besonders bevorzugt beidseitig aufweist, wobei
- eine weitere, mehrlagige Interferenz-Filterschicht 4 auf der maskierten Seite 22 abgeschieden ist, welche abwechselnde erste und zweite Lagen 41, 42 umfasst, wobei die ersten Lagen 41 einem ersten Brechungsindex und die zweiten Lagen 42 einen zweiten Brechungsindex aufweisen, der höher ist als der erste Brechungsindex der ersten Lagen 41, und wobei
- die Interferenz-Entspiegelungsschicht 3 zumindest eine erste und zumindest eine zweite Lage 31, 32 aufweist, wobei der Brechungsindex der zweiten Lage 32 höher ist als der Brechungsindex der ersten Lage 31, und wobei
- die Schichtdicken der weiteren, mehrlagigen Interferenz-Filterschicht 4 unter Einbeziehung der darunterliegenden Interferenz-Entspiegelungsschicht 3 so ausgelegt sind, daß die weitere, mehrlagige Interferenz-Filterschicht 4 zusammen mit der Interferenz-Entspiegelungsschicht 3 ein Farbfilterschichtsystem 5 ergeben, welches zumindest eine Kante im Transmissionsspektrum im sichtbaren Spektralbereich aufweist, welche einen reflektierenden Wellenlängenbereich von einem Wellenlängenbereich trennt, innerhalb welchem Licht durch das Farbfilterschichtsystem transmittiert wird, und wobei
- die weitere, mehrlagige Interferenz-Filterschicht 4 zumindest einen ersten Bereich 6 des Substrats 2 bedeckt und zumindest einen zweiten Bereich 7 freilässt und der zweite Bereich aufgrund der Interferenz-Entspiegelungsschicht 3 entspiegelt ist, wobei zumindest eine der Eigenschaften vorliegt:
   a) das Maximum der Schichtdickensensitivität erster Ordnung aller Lagen der mehrlagigen Entspiegelungsschicht kleiner ist als das Maximum der Schichtdickensensitivität erster Ordnung aller Lagen der weiteren, mehrlagigen Interferenz-Filterschicht,
   b) der Betrag des Maximums der Schichtdickensensitivität erster Ordnung aller Lagen der mehrlagigen Entspiegelungsschicht ist kleiner als der Betrag des Maximums der Schichtdickensensitivität erster Ordnung aller Lagen der weiteren, mehrlagigen Interferenz-Filterschicht,
   c) der Mittelwert der Schichtdickensensitivitäten erster Ordnung aller Lagen der mehrlagigen Entspiegelungsschicht ist kleiner als der Mittelwert der Schichtdickensensitivitäten erster Ordnung aller Lagen der weiteren, mehrlagigen Interferenz-Filterschicht,
   d) der Betrag des Mittelwerts der Schichtdickensensitivitäten erster Ordnung aller Lagen der mehrlagigen Entspiegelungsschicht ist kleiner als der Betrag des Mittelwerts der Schichtdickensensitivitäten erster Ordnung aller Lagen der weiteren, mehrlagigen Interferenz-Filterschicht.

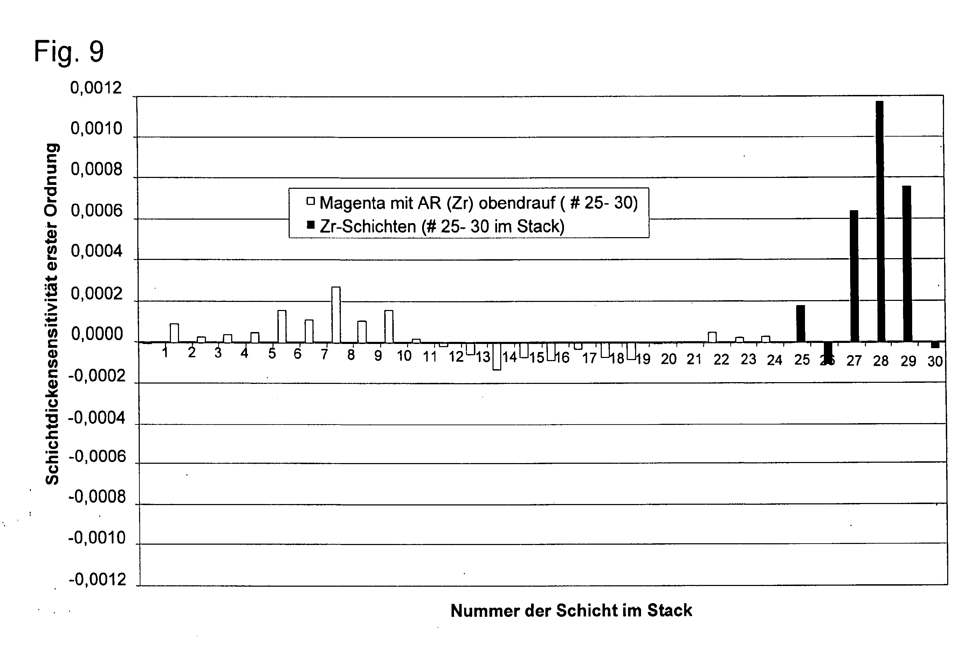

Fig. 9 zeigt zum Vergleich mit Fig. 8 den Fall, dass dasselbe ZrO₂-basierte Entspiegelungsdesign statt unter den Farbfilterstack, wie im dritten Beispiel dargestellt, stattdessen auf den Magenta-Farbfilter nachträglich obendrauf aufgebracht wird. Damit entspricht das Vorgehen zur Durchführung der Optimierung gemäß Fig. 9 dem Fall des zweiten Beispiels (Fig. 7).

Es ist der Fig. 9 zu entnehmen, dass die Schichtdickenempfindlichkeit in diesem Fall ungefähr so hoch ist wie im zweiten Fall. Damit ist kein grundsätzlicher Unterschied zwischen den beiden Fällen zu erkennen, bei denen das Entspiegelungsdesign nachträglich oben auf den Farbfilterstack aufgebracht wird. In diesen Fällen ist die zu erwartende Schichtdickenempfindlichkeit der Entspiegelungsschichten im Gesamtschichtdesign relativ hoch und eine stabile Produktion bei engen Zielvorgaben kann nicht erwartet werden.

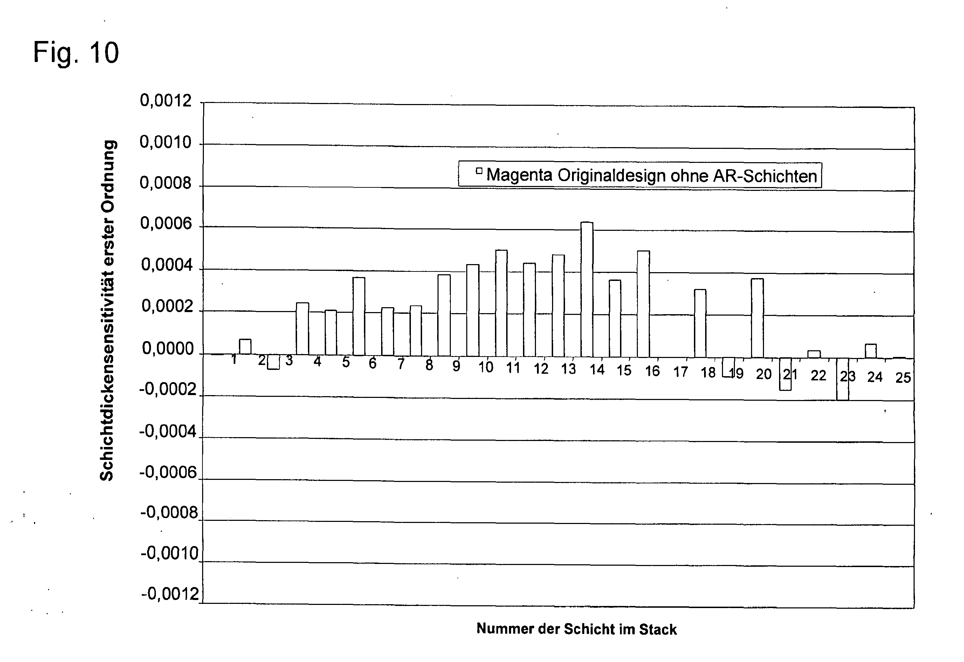

Fig. 10 zeigt die Schichtdickenempfindlichkeit des. Original-Magenta-Schichtdesigns. Dieses Design enthält keinen Stack mit AR-Schichten und alle Schichten konnten daher zur Optimierung freigegeben werden.

Die Höhe und die Verteilung der Schichtdickenempfindlichkeiten der einzelnen Schichten der weiteren, mehrlagigen Interferenz-Filterschicht ähnelt sehr den Verteilungen der Empfindlichkeiten der zugehörigen Schichten in den vier aufgeführten Beispielen mit den unten liegenden oder nachträglich oben aufgebrachten AR-Stacks und ist ein Hinweis dafür, dass die freigegebenen Schichten der Farbfilterstacks bei den erfolgten Optimierungen in ihrer grundsätzlichen Schichtabfolge durch den Optimierungsalgorithmus nicht wesentlich verändert worden sind.

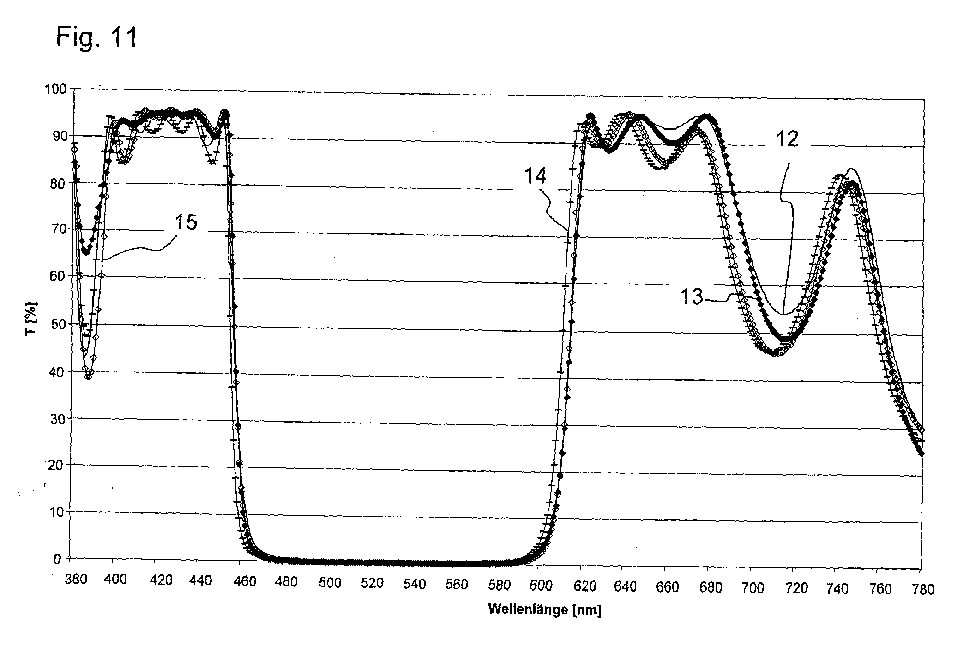

In Fig. 11 sind die Spektralkurven analog der Darstellung in Fig. 5 gezeigt, diesmal aber für den Fall des gewählten Entspiegelungsdesigns mit ZrO₂ als hochbrechendes Material, also entsprechend dem anhand der Fig. 8 erläuterten Beispiel.

An dem Verlauf der Spektralkurve 13 in Fig. 11 des optimierten Magenta-Farbfilterdesigns mit dem unterliegenden AR-Stack auf Zr-Basis kann auf den ersten Blick nicht gesehen werden, ob der Spektralverlauf auf kleine individuelle Schwankungen der einzelnen Schichtdicken des AR-Stacks bezüglich des Farbortes empfindlicher reagieren wird als die entsprechende Spektralkurve 13 in Fig. 5 mit dem unterliegenden AR-Stack auf Nb-Basis.

Es kann jedoch prinzipiell mit Hilfe des eingesetzten Schichtdickenberechnungsprogramms "TFCalc" berechnet werden, wie stark sich die Schichtdickenempfindlichkeit der einzelnen Schichten auf die Stabilität des Farbortes des Gesamtschichtsystems 5 auswirken wird. Dazu wird vorgegeben, mit wie großen Schwankungen der Einzelschichten in der Produktion gerechnet werden muss und wie sich diese Schwankungen relativ verteilen.

In der hierzu durchgeführten Analyse wurde von einer Schwankung der Einzelschichtdicken im Schichtdesign von maximal 2 nm (zu dickeren wie zu dünneren Schichten) ausgegangen. Diese Annahme gilt für alle betrachteten Schichten unabhängig von ihrer nominellen Ausgangsdicke. Es wurde weiter vorgegeben, dass sich die Höhe der maximal 2 nm starken Schichtdickenschwankungen nach einer Normalverteilung um diesen Maximalwert herum verteilen. Für die Analyse wurden jeweils 200 Schritte durchgeführt. Die Farborte wurden dabei für einen angenommenen Schwarzen Strahler mit einer nominellen Farbtemperatur von 5500K berechnet.

In die theoretische Analyse wurden jedoch nur die sechs Schichten des jeweiligen AR-Stacks einbezogen, da nur eine Aussage über die Schichtdickenempfindlichkeit der AR-Schichten im Gesamtschichtsystem erhalten werden soll.

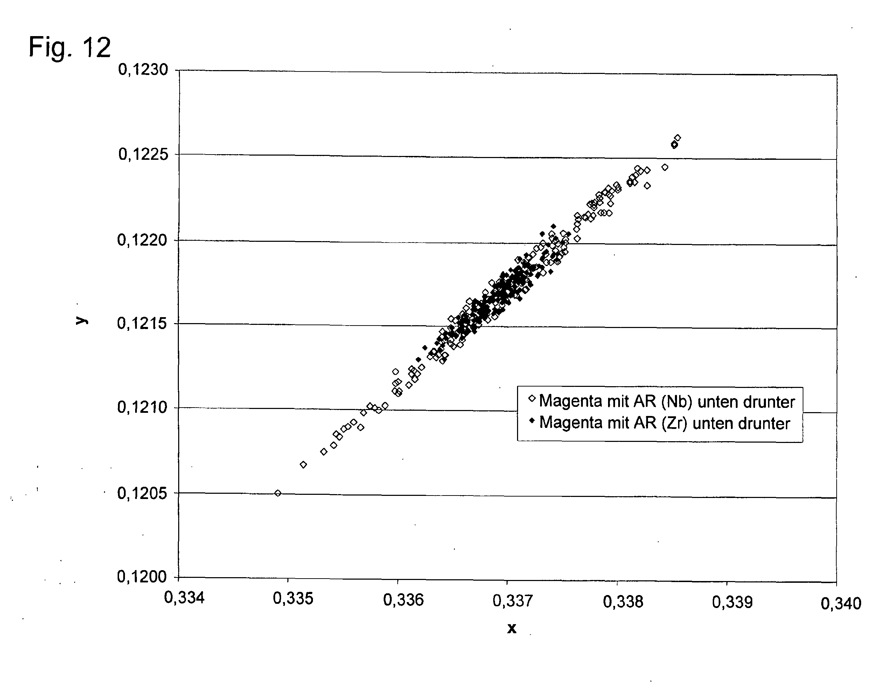

Fig. 12 zeigt das Ergebnis der 200 einzelnen Berechnungen für die beiden Fälle, bei welchen die Entspiegelungsschichten zuerst aufgebracht wurden und infolgedessen unter den Farbfilterstacks liegen. Diese beiden Fälle entsprechen den Fällen aus Fig. 6 (auf Nb-Basis) bzw. Fig. 8 (auf Zr-Basis). Man erkennt klar, dass die durchschnittlich zu erwartenden Schwankungen im Farbort im Fall des Zr-basierten Designs deutlich geringer ausfallen als in dem Fall des Nb-basierten Entspiegelungsdesigns.

Man kann aus dem Diagramm leicht abschätzen, dass die mittlere Schwankung der Farbkoordinaten im Fall des Zr-basierten AR-Design nur etwa ein Drittel der mittleren Schwankung des Nb-basierten AR-Designs betragen, wie es aus dem Vergleich der Höhe der Schichtdickenempfindlichkeit aus Fig. 6 und Fig. 8 auch schon zu erwarten war.

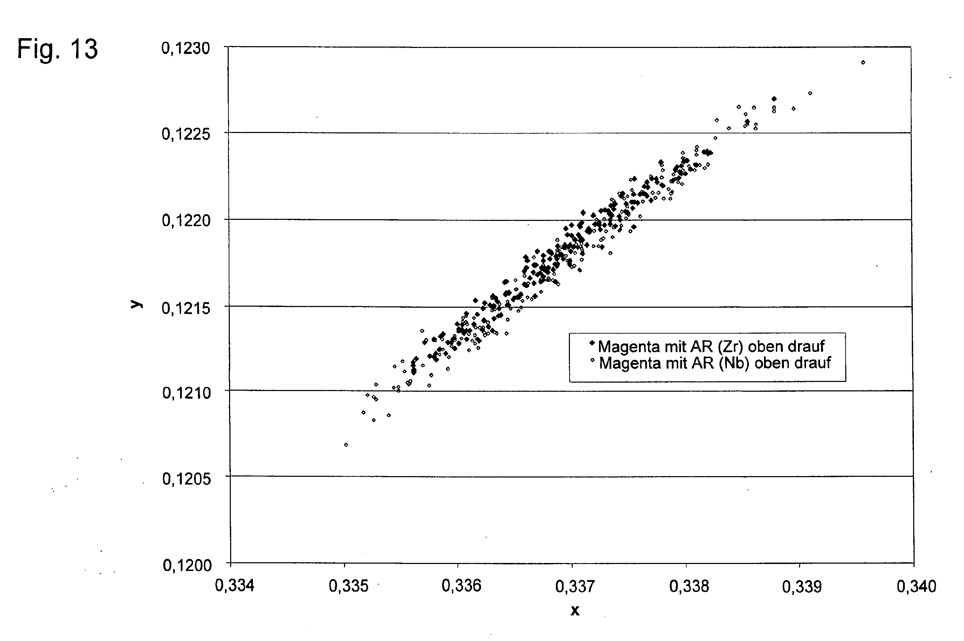

Fig. 13 zeigt das Ergebnis der 200 einzelnen Berechnungen für die beiden Fälle, bei welchen die Entspiegelungsschichten nachträglich auf die vorher aufgebrachten Farbfilterstacks aufgebracht wurden. Diese beiden Fälle entsprechen den Fällen aus Fig. 7 (auf Nb-Basis) bzw. Fig. 9 (auf Zr-Basis). In diesen beiden Fällen sind die auftretenden Farbortschwankungen in jedem Fall relativ groß im Vergleich zu der viel geringeren durchschnittlichen Schwankung, wie sie in Fig. 12 (für das Zr-basierte Entspiegelungsdesign) zu sehen ist, also im Fall eines Design gemäß Fig. 8. Die durchschnittlichen Schwankungen in den beiden in Fig. 13 gezeigten Fällenentsprechen ungefähr der Höhe der durchschnittlichen Schwankungen im Fall des Nb-basierten Designs aus Fig. 12 entsprechend einem Schichtdesign gemäß Fig. 6.

### Daraus kann folgendes Fazit gezogen werden:

Eine stabilere Produktion lässt sich aus den durchgeführten Analysen insbesondere für die Fälle erwarten, dass der Farbfilterstack, beziehungsweise die weitere, mehrlagige Interferenz-Filterschicht nachträglich auf den bereits zuerst beschichteten AR-Stack aufgebracht wird.

Überraschenderweise ist die theoretisch zu erwartende Schichtdickenempfindlichkeit der Schichten des AR-Stacks im Gesamtschichtsystem im gewählten Beispiel deutlich geringer, wenn für das hochbrechende Material im Entspiegelungsdesign ein anderes Material gewählt worden ist als das hochbrechende Material, welches im Farbfilterstack eingesetzt worden ist.

Daraus lässt sich folgern, dass es einen technischen Vorteil darstellt, wenn für die beiden hochbrechenden Materialien des AR-Stacks und des Farbfilterstacks verschiedene Materialien eingesetzt werden. Dieser technische Vorteil lässt sich besonders vorteilhaft mit dem eingangs dargestellten wirtschaftlichen Vorteil verbinden, wenn das mit einer großtechnischen Anlage hergestellte ein-oder zweiseitig entspiegelte Substrat mit einem anderen hochbrechenden Material hergestellt werden würde als der nachträglich in einer anderen Beschichtungsanlage aufgebrachte Farbfilterstack.

Dabei muss es sich nicht unbedingt um eine andere Beschichtungsanlage handeln, sondern es könnte sich um dieselbe Beschichtungsanlage handeln, bei der zuerst kostengünstig, z.B. auf größeren Substraten, die ein- oder beidseitige Entspiegelung vorgenommen wird, dann diese größeren Substrate entsprechend der gewünschten Geometrie der einzelnen Farbfilter vereinzelt werden, die einzelnen Substrate entsprechend einen Maskierungsprozess durchlaufen und die maskierten Substrate anschließend in derselben Anlage mit dem berechneten Farbfilterstack versehen werden würden. Dabei wäre es auch möglich, für diesen zweiten Beschichtungsprozess in derselben Anlage ein anderes hochbrechendes Material einzusetzen.

## Patentansprüche

1. Verfahren zur Herstellung eines Farbfilters zur Erzeugung farbiger Lichtfelder für Beleuchtungszwecke, wobei
- auf einem flächigen transparenten Substrat (2) vollflächig eine Interferenz-Entspiegelungsschicht (3) zumindest auf einer Seite (21, 22), besonders bevorzugt beidseitig hergestellt wird,
- das Substrat (2) dann auf der mit der Interferenz-Entspiegelungsschicht (3) beschichteten Seite (22) mit einer Maskierung versehen wird, welche Bereiche der Seite (22) abdeckt, und wobei dann
- eine weitere, mehrlagige Interferenz-Filterschicht (4) auf der maskierten Seite (22) abgeschieden wird, welche abwechselnde erste und zweite Lagen (41, 42) umfasst, wobei die ersten Lagen (41) einem ersten Brechungsindex und die zweiten Lagen (42) einen zweiten Brechungsindex aufweisen, der sich vom ersten Brechungsindex der ersten Lagen (41) unterscheidet, und wobei
- die Schichtdicken der Lagen (41, 42) der weiteren, mehrlagigen Interferenz-Filterschicht (4) unter Einbeziehung der darunterliegenden Interferenz-Entspiegelungsschicht (3) so ausgelegt werden, daß die weitere, mehrlagige Interferenz-Filterschicht (4) zusammen mit der Interferenz-Entspiegelungsschicht (3) ein Farbfilterschichtsystem (5) ergibt, welches zumindest eine Kante im Transmissionsspektrum im sichtbaren Spektralbereich aufweist, welche einen reflektierenden Wellenlängenbereich von einem Wellenlängenbereich trennt, innerhalb welchem Licht durch das Farbfilterschichtsystem transmittiert wird, und wobei
- die Maskierung nach der Abscheidung der weiteren, mehrlagigen Interferenz-Filterschicht (4) entfernt wird, so daß die weitere, mehrlagige Interferenz-Filterschicht (4) zumindest einen ersten Bereich (6) des Substrats (2) bedeckt und zumindest einen zweiten Bereich (7) freilässt und der zweite Bereich aufgrund der Interferenz-Entspiegelungsschicht (3) entspiegelt ist.

2. Verfahren gemäß dem vorstehenden Anspruch, **dadurch gekennzeichnet, daß**
- die Interferenz-Entspiegelungsschicht (3) auf einem Vorsubstrat aufgebracht wird, aus welchem
- dann das Substrat (2) herausgetrennt wird, und wobei
- die weitere, mehrlagige Interferenz-Filterschicht (4) auf dem herausgetrennten Substrat (2) aufgebracht wird.

3. Verfahren gemäß Anspruch 1, **dadurch gekennzeichnet, daß** -sowohl die Interferenz-Entspiegelungsschicht (3),
- als auch die weitere, mehrlagige Interferenz-Filterschicht (4) auf einem Vorsubstrat aufgebracht werden, und
- dann das Substrat (2) herausgetrennt wird.

4. Verfahren gemäß einem der vorstehenden Ansprüche, **dadurch gekennzeichnet, daß** die weitere, mehrlagige Interferenz-Filterschicht (4) unter Einbeziehung der Interferenz-Entspiegelungsschicht (3) so ausgelegt und aufgebracht wird, daß das Licht in einem an die Kante angrenzenden reflektierenden Wellenlängenbereich mit einer spektralen Breite von zumindest 60 Nanometern zumindest zu im Mittel 75%, vorzugsweise zumindest zu im Mittel 90%, besonders bevorzugt zu im Mittel mehr als 95% reflektiert wird.

5. Verfahren gemäß einem der vorstehenden Ansprüche, **dadurch gekennzeichnet, daß** die weitere, mehrlagige Interferenz-Filterschicht (4) unter Einbeziehung der Interferenz-Entspiegelungsschicht (3) so berechnet und aufgebracht wird, daß ein Farbfilterschichtsystem (5) erhalten wird, welches zwei Kanten im Transmissionsspektrum im sichtbaren Spektralbereich aufweist, wobei eine erste Kante im Bereich zwischen 435 bis 495 Nanometern, vorzugsweise zwischen 440 und 460 Nanometern und eine zweite Kante im Bereich zwischen 600 und 640 Nanometern, vorzugsweise zwischen 605 und 630 Nanometern Wellenlänge liegt und wobei das Farbfilterschichtsystem (5) im Wellenlängenbereich zwischen diesen Kanten reflektiert, so daß aus weissem Licht nach Transmission durch den mit dem Farbfilterschichtsystem bedeckten Bereich magentafarbiges Licht erhalten wird.

6. Verfahren gemäß einem der vorstehenden Ansprüche, **dadurch gekennzeichnet, daß** eine Interferenz-Entspiegelungsschicht (3) abgeschieden wird, die zumindest drei, vorzugsweise zumindest vier Lagen (31, 32), besonders bevorzugt sechs Lagen (31, 32) aufweist.

7. Verfahren gemäß einem der vorstehenden Ansprüche, **dadurch gekennzeichnet, daß** die Interferenz-Entspiegelungsschicht (3) und die weitere, mehrlagige Interferenz-Filterschicht (4) jeweils Lagen (31, 41) mit einem ersten Brechungsindex und Lagen (32, 42) mit höheren Brechungsindex aufweisen, **dadurch gekennzeichnet, daß** die Lagen (32, 42) mit höherem Brechungsindex mit zumindest einem der Oxide Titanoxid, Nioboxid, Zirkonoxid, Tantaloxid hergestellt werden.

8. Verfahren gemäß einem der vorstehenden Ansprüche, wobei die Interferenz-Entspiegelungsschicht (3) und die weitere, mehrlagige Interferenz-Filterschicht (4) jeweils mit Lagen (31, 41) mit einem ersten Brechungsindex und Lagen (32, 42) mit höheren Brechungsindex hergestellt werden, **dadurch gekennzeichnet, daß** die Lagen (42) mit höherem Brechungsindex der weiteren, mehrlagigen Interferenz-Filterschicht (4) aus einem sich von den Lagen (32) mit höheren Brechungsindex der Interferenz-Entspiegelungsschicht (3) unterscheidendem Material hergestellt werden.

9. Verfahren gemäß dem vorstehenden Anspruch, **dadurch gekennzeichnet, daß** eine Interferenz-Entspiegelungsschicht (3) mit Zirkoniumoxid oder Titanoxid enthaltenden Lagen (32) mit höherem Brechungsindex und eine weitere, mehrlagige Interferenz-Filterschicht (4) mit Nioboxid, insbesondere Niobpentoxid enthaltenden Lagen (42) mit höherem Brechungsindex aufgebracht wird.

10. Farbfilter (1) zur Erzeugung farbiger Lichtfelder für Beleuchtungszwecke, welcher
- auf einem flächigen transparenten Substrat (2) vollflächig eine Interferenz-Entspiegelungsschicht (3) zumindest auf einer Seite (21, 22), besonders bevorzugt beidseitig aufweist, wobei
- eine weitere, mehrlagige Interferenz-Filterschicht (4) auf der maskierten Seite (22) abgeschieden ist, welche abwechselnde erste und zweite Lagen (41, 42) umfasst, wobei die ersten Lagen (41) einem ersten Brechungsindex und die zweiten Lagen (42) einen zweiten Brechungsindex aufweisen, der höher ist als der erste Brechungsindex der ersten Lagen (41), und wobei
- die Interferenz-Entspiegelungsschicht (3) zumindest eine erste und zumindest eine zweite Lage (31, 32) aufweist, wobei der Brechungsindex der zweiten Lage (32) höher ist als der Brechungsindex der ersten Lage (31), und wobei
- die Schichtdicken der weiteren, mehrlagigen Interferenz-Filterschicht (4) unter Einbeziehung der darunterliegenden Interferenz-Entspiegelungsschicht (3) so ausgelegt sind, daß die weitere, mehrlagige Interferenz-Filterschicht (4) zusammen mit der Interferenz-Entspiegelungsschicht (3) ein Farbfilterschichtsystem (5) ergeben, welches zumindest eine Kante im Transmissionsspektrum im sichtbaren Spektralbereich aufweist, welche einen reflektierenden Wellenlängenbereich von einem Wellenlängenbereich trennt, innerhalb welchem Licht durch das Farbfilterschichtsystem transmittiert wird, und wobei
- die weitere, mehrlagige Interferenz-Filterschicht (4) zumindest einen ersten Bereich (6) des Substrats (2) bedeckt und zumindest einen zweiten Bereich (7) freilässt und der zweite Bereich aufgrund der Interferenz-Entspiegelungsschicht (3) entspiegelt ist.

11. Farbfilter gemäß dem vorstehenden Anspruch, **dadurch gekennzeichnet, daß** sich die Materialien der zweiten Lagen (42) der weiteren, mehrlagigen Interferenz-Filterschicht (4) und der zumindest einen zweiten Lage (32) der Interferenz-Entspiegelungsschicht (3) unterscheiden.

12. Farbfilter gemäß einem der beiden vorstehenden Ansprüche, **dadurch gekennzeichnet, daß** die weitere, mehrlagige Interferenz-Filterschicht (4) unter Einbeziehung der Interferenz-Entspiegelungsschicht (3) so ausgelegt ist, daß das Licht in einem an die Kante angrenzenden reflektierenden Wellenlängenbereich mit einer spektralen Breite von zumindest 60 Nanometern zumindest zu im Mittel 75%, vorzugsweise zumindest zu im Mittel 90%, besonders bevorzugt zu zumindest zu im Mittel mehr als 95% reflektiert wird.

13. Farbfilter gemäß dem vorstehenden Anspruch, **dadurch gekennzeichnet, daß** der Betrag des Maximums der Schichtdickensensitivität erster Ordnung aller Lagen der mehrlagigen Entspiegelungsschicht kleiner als der Betrag des Maximums der Schichtdickensensitivität erster Ordnung aller Lagen der weiteren, mehrlagigen Interferenz-Filterschicht (4) ist.

14. Farbfilter gemäß einem der vorstehenden Ansprüche,
**dadurch gekennzeichnet, daß**
- der Mittelwert der Schichtdickensensitivitäten erster Ordnung aller Lagen der mehrlagigen Entspiegelungsschicht kleiner als der Mittelwert der Schichtdickensensitivitäten erster Ordnung aller Lagen der weiteren, mehrlagigen Interferenz-Filterschicht (4) ist, oder daß
- der Betrag des Mittelwerts der Schichtdickensensitivitäten erster Ordnung aller Lagen der mehrlagigen Entspiegelungsschicht kleiner als der Betrag des Mittelwerts der Schichtdickensensitivitäten erster Ordnung aller Lagen der weiteren, mehrlagigen Interferenz-Filterschicht (4) ist.

15. Beleuchtungsvorrichtung mit zumindest einem bewegbaren, variabel einstellbaren Farbfilter (1) gemäß einem der vorstehenden Ansprüche.
